Europäisches Patentamt

European Patent Office

Office européen des brevets

(11) Veröffentlichungsnummer: **0 204 188**
B1

(12) # EUROPÄISCHE PATENTSCHRIFT

(45) Veröffentlichungstag der Patentschrift:
18.10.89

(21) Anmeldenummer: 86106583.7

(22) Anmeldetag: 15.05.86

(51) Int. Cl.⁴: **B32B 17/10**, C03C 27/12,
E04B 1/86

(54) **Durchsichtige Schalldämmbauplatte.**

(30) Priorität: 21.05.85 DE 3518154

(43) Veröffentlichungstag der Anmeldung:
10.12.86 Patentblatt 86/50

(45) Bekanntmachung des Hinweises auf die Patenterteilung:
18.10.89 Patentblatt 89/42

(84) Benannte Vertragsstaaten:
AT BE CH DE FR GB IT LI SE

(56) Entgegenhaltungen:
DE-A- 2 332 915
DE-A- 2 929 491
FR-A- 2 516 646
US-A- 3 249 178

(73) Patentinhaber: FLACHGLAS AKTIENGESELLSCHAFT,
Otto-Seeling-Promenade 10-14, D-8510 Fürth(DE)

(72) Erfinder: Böhmer, Walter, Dipl.-Phys.,
Buer-Gladbecker-Strasse 53b,
D-4650 Gelsenkirchen(DE)
Erfinder: Reichmann, Peter, Dipl.-Phys., Am
Dahlbusch 78, D-4650 Gelsenkirchen(DE)

(74) Vertreter: Andrejewski, Walter et al, Patentanwälte
Dipl.-Phys. Dr. Walter Andrejewski Dipl.-Ing. Dr.-Ing.
Manfred Honke Dipl.-Phys. Dr. Karl Gerhard Masch
Theaterplatz 3, Postfach 10 02 54, D-4300 Essen 1(DE)

## Beschreibung

Die Erfindung bezieht sich gattungsgemäß auf eine Schalldämmbauplatte aus mehreren unter Zwischenschaltung von Kunststoffschichten zu einem Verbundaggregat vereinigten Glasscheiben. Der Ausdruck Schalldämmbauplatte bezeichnet im Rahmen der Erfindung solche für durchsichtige Innenraumwände, z. B. in Aufnahmestudios für Rundfunk- und Fernsehanstalten, aber auch solche für Fassadenverkleidungen oder solche, die als schalldämmende Isolierglaseinheiten für Fenster, Türen und dergleichen bestimmt sind. Insoweit sind die erfindungsgemäßen Schalldämmbauplatten für spezielle Verwendungszwecke eingerichtet.

Die (aus der Praxis) bekannten Schalldämmbauplatten sind in bezug auf Dicke der Glasscheiben und Auswahl der Kunststoffschichten nicht so abgestimmt, daß bei ausreichenden Werten für das bewertete Schalldämmaß nach DIN 52 210 auch eine relativ glatte Schalldämmkurve nach der genannten Norm, die störende Resonanzeinbrüche bzw. Spuranpassungseinbrüche nicht aufweist, gegeben ist.

Der Erfindung liegt die Aufgabe zugrunde, anzugeben, wie bei einer gattungsgemäßen Schalldämmbauplatte die Dicke der Glasscheiben sowie die Kunststoffschichten abzustimmen sind, damit bei ausreichenden Werten für das bewertete Schalldämmaß nach DIN 52 210 auch eine relativ glatte Schalldämmkurve nach der genannten Norm, die störende Resonanzeinbrüche nicht aufweist, gegeben ist. Mit anderen Worten sollen Schalldämmbauplatten in Form von Verbundaggregaten aus Glas geschaffen werden, die bei einer vorgegebenen Gesamtdicke ein bewertetes Schalldämmaß über einem vorgegebenen Schwellwert aufweisen, und zwar mit einer Schalldämmkurve, die möglichst glatt, ohne störende Resonanzeinbrüche bzw. Spuranpassungseinbrüche verläuft.

Die Gesamtglasdicke soll nicht mehr als 55 mm, nach einigen bevorzugten Ausführungsformen nicht mehr als 40 mm ausmachen. Das bewertete Schalldämmaß soll über 40 dB liegen.

Die Lösung dieser Aufgabe ist gegeben durch die Kombination der folgenden Merkmale

1) zwei Glasscheiben gleicher Dicke, von denen eine in bezug auf das Verbundaggregat außen liegt, sind durch eine Kunststoffverbundfolie vereinigt (folienverbundene Glasscheiben),

2) an die innere der beiden folienverbundenen Glasscheiben sind unter Zwischenschaltung von Schalldämmgießharzschichten zumindest zwei weitere Glasscheiben angeschlossen (gießharzvereinigte Glasscheiben),

3) die Gesamtdicke der beiden folienverbundenen Glasscheiben ist gleich oder größer als die Gesamtdicke der gießharzvereinigten Glasscheiben.

Die Gesamtdicke des Verbundaggregates soll 55 mm nicht übersteigen, die Dicke sowie die Weichheit der Gießharzschichten werden zweckmäßigerweise so gewählt, daß das Verbundaggregat bei einem bewerteten Schalldämmaß von über 40 dB im Frequenzbereich von 100 bis 3150 Hz eine Schalldämmkurve ohne störende Resonanzeinbrüche bzw. Spuranpassungseinbrüche aufweist. Nach bevorzugter Ausführungsform der Erfindung sind die folienverbundenen Glasscheiben durch eine oder durch mehrere aufeinanderliegenden Polyvinylbutyralfolien einer Einzelfoliendicke von 0,38 mm verbunden. Nach bevorzugter Ausführungsform der Erfindung sind fernerhin die gießharzvereinigten Glasscheiben durch Schalldämmgießharzschichten einer Dicke von 1.2 mm vereinigt. In diesem Zusammenhang hat sich bewährt, die gießharzvereinigten Glasscheiben durch Schalldämmgießharzschichten aus Polymethylmetacrylat zu vereinigen, deren Shorehärte < 20, vorzugsweise < 10, eingestellt ist.

Schalldämmplatten aus mehreren unter Zwischenschaltung von Kunststoffschichten zu einem Verbundaggregat vereinigten Glasscheiben, die in einem großen Frequenzbereich eine gute Schalldämmung aufweisen, sind bekannt (US-A 3 249 178). Hier sind jedoch komplizierte Abstimmungen der Steifheit der Kunststoffschichten, der Schermodule und der Dichten in bezug auf die Geschwindigkeit der Scherwellen erforderlich.

Im einzelnen lehrt die Erfindung, für die angegebenen Verwendungszwecke bewährt, daß die folienverbundenen Glasscheiben eine Dicke von entweder 4 mm oder 8 mm oder 12 mm aufweisen. Entsprechend lehrt die Erfindung, daß die gießharzvereinigten Glasscheiben eine Dicke von 4 mm oder 8 mm oder 10 mm oder Kombinationen davon aufweisen. Das führt zu speziellen Verbundaggregaten, die sich bei vorgegebener Gesamtdicke des Aggregates in bezug auf das bewertete Schalldämmaß mit sehr glatter Schalldämmkurve ohne störende Resonanzeinbrüche oder Spuranpassungseinbrüche auszeichnen. In der Ausführungsform mit folienverbundenen Glasscheiben von 4 mm Dicke lehrt die Erfindung dazu, daß die gießharzvereinigten Glasscheiben ebenfalls eine Dicke von 4 mm aufweisen. In der Ausführungsform mit folienverbundenen Glasscheiben von 8 mm Dicke lehrt die Erfindung dazu, daß drei gießharzvereinigte Glasscheiben angeordnet sind und diese, bezogen auf das Verbundaggregat, von innen nach außen eine Dicke von 8 mm, 4 mm, 4 mm aufweisen. In der weiteren Ausführungsform mit folienverbundenen Glasscheiben von 12 mm Dicke lehrt die Erfindung insoweit, daß drei gießharzvereinigte Glasscheiben angeordnet sind und diese, bezogen auf das Verbundaggregat, von innen nach außen eine Dicke von 10 mm, 8 mm, 4 mm besitzen.

In dem Merkmal, daß durch die Dicke sowie die Weichheit der Gießharzschicht ein bewertetes Schalldämmaß von über 40 dB eingestellt ist, kommt eine besondere Auswahl der Gießharzschicht zum Ausdruck, und zwar in bezug auf Dicke und Weichheit und damit in bezug auf eine Dämpfungswirkung. Die Dicke soll nicht zu groß sein und etwa 1,5 mm nicht überschreiten. Sie liegt nach bevorzugten Ausführungsformen der Erfindung darunter, nämlich, wie vorstehend behandelt, bei 1,2 mm. Damit verläßt die Erfindung für ähnliche Zwecke entwickelte Baulehren, die darauf gerichtet sind, extrem dicke Kunststoffschichten, deren Dicke zumindest der Dicke der Glasscheibe entspricht, einzusetzen. Die zur Erreichung des angegebenen, bewerteten Schalldämmaßes erforderliche Dämpfungswirkung der Gießharzschicht kann experimentell ermittelt werden, was keine Schwierigkeiten bereitet, zumal Schalldämmbauplatten, ehe sie für die Fertigung freigegeben werden, ohnehin im Schallfeld untersucht und optimiert werden. Grundsätzlich ist es bekannt, bei Schichtglasscheiben mit Zwischenschichten aus Polyvinylbutyral diese Zwischenschichten alle extrem weich einzustellen, was sich, auch aus statischen Gründen, wenig bewährt hat. Die Erfindung setzt insoweit Folien aus Polyvinylbutyral ein, wie sie auch für die Herstellung von Verbundsicherheitsglas und dergleichen verwendet werden. Man kann aber auch mit anderen Kunststoffverbundfolien arbeiten. Die Erfindung beruht auf der Erkenntnis, daß durch die angegebenen besonderen Maßgaben ein Verbundglasaggregat bei geringer Dicke zu sehr hohen Werten des bewerteten Schalldämmaßes angehoben werden kann, und zwar bei ausreichend glatter Schalldämmkurve.

Im Rahmen der Erfindung liegt es, bei Anordnung von mehreren Schalldämmbauplatten in einer Trennwand und/oder zu einer Raumzelle die Schalldämmbauplatten mit ihren Randflächen unmittelbar, rahmenfrei aneinander anzuschließen z. B. miteinander zu verkleben. Dadurch wird erreicht, daß durch zwischengeschaltete Rahmenbauteile Schallbrücken nicht entstehen.

Im folgenden wird die Erfindung anhand von Ausführungsbeispielen die von Zeichnungen begleitet sind, ausführlicher erläutert.

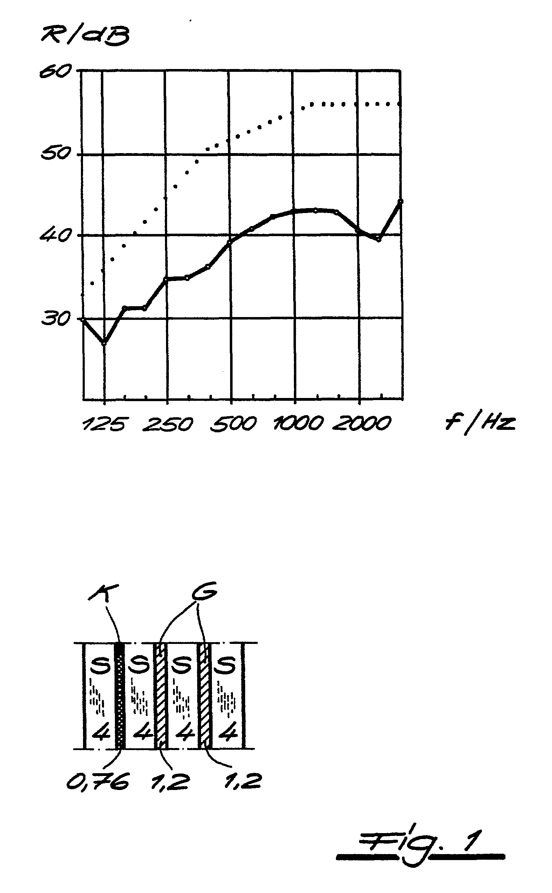

Im Ausführungsbeispiel der Fig. 1 erkennt man zunächst unten den Aufbau einer erfindungsgemäßen, in diesem Ausführungsbeispiel untersuchten Schalldämmbauplatte. Alle Glasscheiben S besitzen die gleiche Dicke von 4 mm, sie bestehen z. B. aus Weißglas. Vier Glasscheiben sind vorgesehen. Die Kunststoffverbundfolie K besitzt eine Dicke von 0,76 mm, sie besteht aus Polyvinylbutyral. Die Gießharzschichten G besitzen eine Dicke von 1,2 mm. Die Fig. 1 zeigt oben eine graphische Darstellung, auf deren Abszissenachse die Frequenz in Hz, auf deren Ordinatenachse die Schalldämmung in dB aufgetragen ist. Man erkennt ferner die Bezugskurve nach DIN 52 210 in Form einer Reihe von Punkten und die gemessenen Werte der Schalldämmung in Form einer ausgezogenen Kurve, die die dort eingezeichneten Meßpunkte verbindet. Man entnimmt aus dieser graphischen Darstellung nach den Regeln der vorstehend angegebenen DIN ein bewertetes Schalldämmaß $R_W$ von 41 dB. Die Meßkurve verläuft sehr glatt, sie zeigt kaum einen Einbruch.

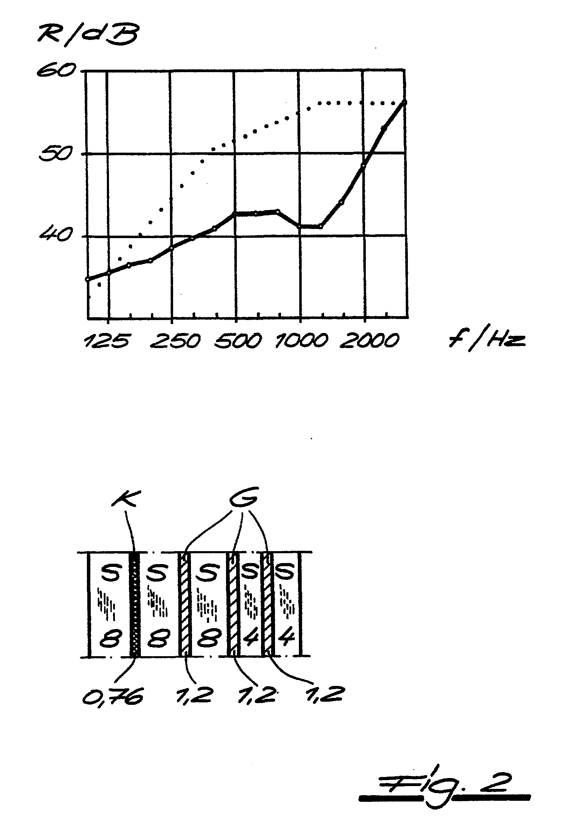

Im Ausführungsbeispiel der Fig. 2 erkennt man zunächst unten den Aufbau einer anderen erfindungsgemäßen, in diesem Ausführungsbeispiel untersuchten Schalldämmbauplatte. Die Glasscheiben S besitzen die Dicke von 8 mm bzw. von 4 mm. Fünf Glasscheiben sind vorgesehen. Die Kunststoffverbundfolie K besitzt eine Dicke von 0,76 mm, sie besteht aus Poyvinylbutyral. Die Gießharzschichten G besitzen eine Dicke von 1,2 mm. Die Fig. 2 zeigt oben eine graphische Darstellung, auf deren Abszissenachse die Frequenz in Hz, auf deren Ordinatenachse die Schalldämmung in dB aufgetragen ist. Man erkennt fernerhin die Bezugskurve nach DIN 52 210 in Form einer Reihe von Punkten und die gemessenen Werte der Schalldämmung in Form einer ausgezogenen Kurve, die die dort eingezeichneten Meßpunkte verbindet. Man entnimmt aus dieser graphischen Darstellung nach den Regeln der vorstehend angegebenen DIN ein bewertetes Schalldämmaß $R_W$ von 45 dB. Die Meßkurve verläuft sehr glatt, sie zeigt kaum einen Einbruch.

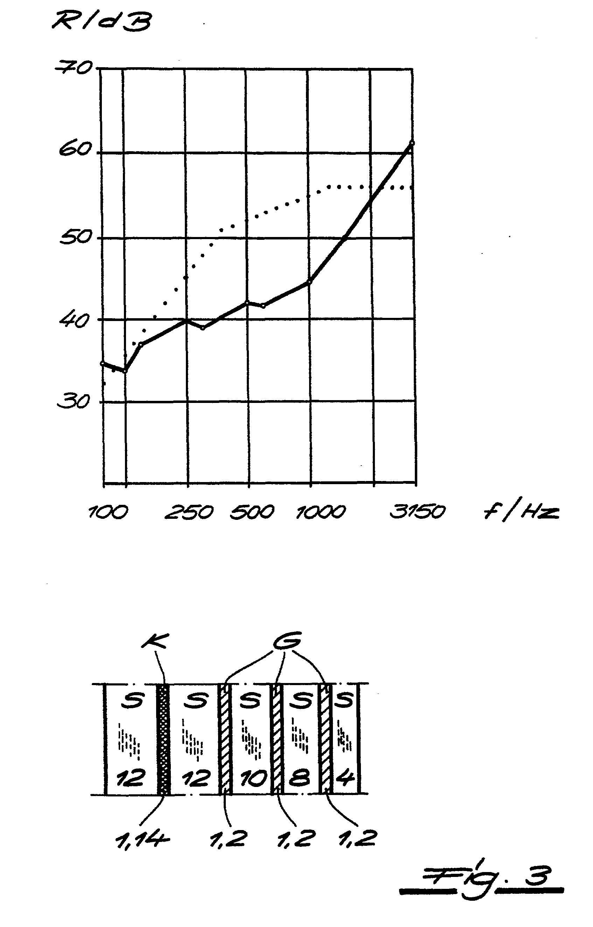

Mit den obigen Ausführungen versteht sich die graphische Darstellung in Fig. 3 von selbst. Es wurde bei dem Ausführungsbeispiel der Fig. 3 mit einer Schalldämmplatte gearbeitet, wie sie unten in Fig. 3 dargestellt wurde. Es sind dabei zwei durch eine Kunststoffolie K verbundene Glasscheiben S der Dicke von 12 mm und drei durch Gießharz G verbundene Glasscheiben S vorgesehen, die, von innen nach außen, eine Dicke von 10 mm, 8 mm und 4 mm aufweisen.

**Patentansprüche**

1. Durchsichtige Schalldämmbauplatte aus mehreren unter Zwischenschaltung von Kunstharzschichten zu einem Verbundaggregat vereinigten Glasscheiben, gekennzeichnet durch die Kombination der folgenden Merkmale

1) zwei Glasscheiben gleicher Dicke, von denen eine in bezug auf das Verbundaggregat außen liegt, sind durch eine Kunststoffverbundfolie vereinigt (folienverbundene Glasscheiben),

2) an die innere der beiden folienverbundenen Glasscheiben sind unter Zwischenschaltung von Schalldämmgießharzschichten zumindest zwei weitere Glasscheiben angeschlossen (gießharzvereinigte Glasscheiben).

3) die Gesamtdicke der beiden folienverbundenen Glasscheiben ist gleich oder größer als die Gesamtdicke der gießharzvereinigten Glasscheiben.

2. Schalldämmbauplatte nach Anspruch 1, dadurch gekennzeichnet, daß die Gesamtdicke des Verbundaggregates 55 mm nicht übersteigt und die Dicke sowie die Weichheit der Gießharzschichten so gewählt ist, daß das Verbundaggregat bei einem bewerteten Schalldämmaß von über 40 dB im Frequenzbereich von 100 bis 3150 Hz eine Schalldämmkurve ohne störende Resonanzeinbrüche bzw. Spuranpassungseinbrüche aufweist.

3. Schalldämmbauplatte nach einem der Ansprüche 1 oder 2, dadurch gekennzeichnet, daß die folienverbundenen Glasscheiben durch eine oder durch mehrere aufeinanderliegende Polyvinylbutyralfolien einer Einzelfoliendicke von 0,38 mm verbunden sind.

4. Schalldämmbauplatte nach einem der Ansprüche 1 bis 3, dadurch gekennzeichnet, daß die gießharzvereinigten Glasscheiben durch Schalldämmgießharzschichten einer Dicke von 1,2 mm vereinigt sind.

5. Schalldämmbauplatte nach Anspruch 4, dadurch gekennzeichnet, daß die gießharzvereinigten Glasscheiben durch Schalldämmgießharzschichten aus Polymethylmetacrylat vereinigt sind, Shorehärte < 20, vorzugsweise < 10.

6. Schalldämmbauplatte nach einem der Ansprüche 1 bis 5, dadurch gekennzeichnet, daß die folienverbundenen Glasscheiben eine Dicke von entweder 4 mm oder 8 mm oder 12 mm aufweisen.

7. Schalldämmbauplatte nach Anspruch 6, dadurch gekennzeichnet, daß die gießharzvereinigten Glasscheiben eine Dicke von 4 mm oder 8 mm oder 10 mm oder Kombinationen davon aufweisen.

8. Schalldämmbauplatte nach Anspruch 6 in der Ausführungsform mit folienverbundenen Glasscheiben von 4 mm Dicke, dadurch gekennzeichnet, daß die gießharzvereinigten Glasscheiben ebenfalls eine Dicke von 4 mm aufweisen (Fig. 1).

9. Schalldämmbauplatte nach Anspruch 6 in der Ausführungsform mit folienverbundenen Glasscheiben von 8 mm Dicke, dadurch gekennzeichnet, daß drei gießharzvereinigte Glasscheiben angeordnet sind und diese, bezogen auf das Verbundaggregat, von innen nach außen eine Dicke von 8 mm, 4 mm, 4 mm aufweisen (Fig. 2).

10. Schalldämmbauplatte nach Anspruch 6 in der Ausführungsform mit folienverbundenen Glasscheiben von 12 mm Dicke, dadurch gekennzeichnet, daß drei gießharzvereinigte Glasscheiben angeordnet sind und diese, bezogen auf das Verbundaggregat, von innen nach außen eine Dicke von 10 mm, 8 mm, 4 mm aufweisen (Fig. 3).

## Claims

1. A transparent sound-attenuating construction plate consisting of several glass sheets united to form a laminated assembly by the interposition of layers of synthetic resin, characterized by the combination of the following features:
   1) two glass sheets of equal thickness, one of which lies externally in relation to the composite assembly, are united by a plastics laminating film (film-bonded glass sheets),
   2) at least two further glass sheets (cast resin bonded glass sheets) are attached to the innermost of the two film-bonded glass sheets, by the interposition of sound-attenuating layers of cast resin (cast resin bonded glass sheets),
   3) the total thickness of the two film-bonded glass sheets is equal to or greater than the total thickness of the cast resin bonded glass sheets.

2. A sound-attenuating construction plate according to Claim 1, characterized in that the total thickness of the laminated assembly does not exceed 55mm and the thickness as well as the resilience of the cast resin layers are so selected that the laminated assembly, with an evaluated sound-attenuation factor of more than 40 dB in the frequency range of 100 to 3150 Hz, possesses a sound-attenuation curve having no deleterious resonance breakdowns or track-accommodation breakdowns.

3. A sound-attenuating construction plate according to one of Claims 1 or 2, characterized in that the film-bonded glass sheets are bonded together by one or more superimposed polyvinylbutyrate films of an individual film thickness of 0.38 mm.

4. A sound-attenuating construction plate according to one of Claims 1 to 3, characterized in that the cast resin bonded glass sheets are bonded together by sound-attenuating cast resin layers having a thickness of 1.2 mm.

5. A sound-attenuating construction plate according to Claim 4, characterized in that the cast resin bonded glass sheets are bonded together by sound-attenuating cast resin layers of polymethylmethacrylate the Shore hardness of which is less than 20 and preferably less than 10.

6. A sound-attenuating construction plate according to one of Claims 1 to 5, characterized in that the film-bonded glass sheets have a thickness of either 4 mm or 8 mm or 12 mm.

7. A sound-attenuating construction plate according to Claim 6, characterized in that the cast resin bonded glass sheets have a thickness of 4 mm or 8 mm or 10 mm or a combination thereof.

8. A sound-attenuating construction plate according to Claim 6 in the form of construction with film-bonded glass plates 4mm thick, characterized in that the cast resin bonded glass sheets similarly have a thickness of 4 mm (Fig. 1).

9. A sound-attenuating construction plate according to Claim 6 in the form of construction with film-bonded glass plates 8 mm thick, characterized in that three cast resin bonded glass sheets are involved and that they, from the inside to the outside in relation to the composite assembly, have thicknesses of 8 mm, 4 mm and 4 mm (Fig. 2).

10. A sound-attenuating construction plate according to Claim 6 in the form of construction with film-bonded glass sheets 12mm thick, characterized in that three cast resin bonded glass sheets are involved and that they, from the inside to the outside in relation to the composite assembly, have thicknesses of 10 mm, 8 mm and 4 mm (Fig. 3).

## Revendications

1. Panneau mural d'isolation phonique transparent constitué d'une pluralité de plaques de verre réunies, avec interposition de couches de résine synthétique, en un agrégat composite, caractérisé par la combinaison des caractéristiques suivantes:
   1) Deux plaques de verre d'égale épaisseur dont l'une se situe à l'extérieur par rapport à l'agrégat composite, sont réunies par une feuille de matière plastique de liaison (plaques de verre avec couche intérieure de matiére plastique),
   2) à la plaque intérieure des deux plaques de verre réunies par une feuille de matière plastique sont rattachées, avec interposition de couches de résine d'isolation phonique, au moins deux plaques de verre supplémentaires (plaques de verre avec couche intérieure de résine),
   3) l'épaisseur totale des deux plaques de verre avec couche intérieure de matière plastique est égale ou supérieure à l'épaisseur totale des plaques de verre avec couche intérieure de résine.

2. Panneau mural d'isolation phonique selon la revendication 1, caractérisé par le fait que l'épaisseur totale de l'agrégat composite ne dépasse pas 55 mm et que l'épaisseur ainsi que la mollesse des couches de résine sont choisies de telle façon que, pour un indice de qualité de l'isolation contre les sons aériens de plus de 40 dB, l'agrégat présente dans la gamme des fréquences de 100 à 3150 Hz une courbe d'isolation phonique sans affaissements gênants provoqués par la résonance et respectivement l'adaptation d'alignement.

3. Panneau mural d'isolation phonique selon l'une des revendications 1 ou 2, caractérisé par le fait que les plaques de verre avec une couche intérieure de matière plastique sont réunies par une ou plusieurs feuilles superposées de polybutyral de vinyle d'une épaisseur unitaire de 0,38 mm.

4. Panneau mural d'isolation phonique selon l'une des revendications 1 à 3, caractérisé par le fait que les plaques de verre avec couche intérieure de résine sont réunies par des couches de résine d'isolation phonique d'une épaisseur de 1,2 mm.

5. Panneau mural d'isolation phonique selon la revendication 4, caractérisé par le fait que les plaques de verre avec couche intérieure de résine sont réunies par des couches de résine d'isolation phonique de polyméthacrylate de méthyle, dureté Shore < 20, de préférence < 10.

6. Panneau mural d'isolation phonique selon l'une des revendications 1 à 5, caractérisé par le fait que les plaques de verre réunies avec interposition d'une feuille de matière plastique présentent une épaisseur de 4 mm ou 8 mm ou 12 mm.

7. Panneau mural d'isolation phonique selon la revendication 6, caractérisé par le fait que les plaques de verre réunies par une couche de résine présentent und épaisseur de 4 mm ou 8 mm ou 10 mm ou de combinaisons de celles-ci.

8. Panneau mural d'isolation phonique selon la revendication 6, dans la variante avec des plaques de verre d'une épaisseur de 4 mm réunies avec interposition d'une feuille de matière plastique, caractérisé par le fait que les plaques de verre réunies par une couche de résine présentent, elles aussi, une épaisseur de 4 mm (fig. 1).

9. Panneau mural d'isolation phonique selon la revendication 6, dans la variante avec des plaques de verre d'une épaisseur de 8 mm réunies avec interposition d'une feuille de matière plastique, caractérisé par le fait qu'il comprend trois plaques de verre réunies par des couches de résine et présentant, par rapport à l'agrégat composite, de l'intérieur vers l'extérieur, une épaisseur de 8 mm, 4 mm, 4 mm (fig. 2).

10. Panneau mural d'isolation phonique selon la revendication 6, dans la variante avec des plaques de verre d'une épaisseur de 12 mm réunies avec interposition d'une feuille de matière plastique, caractérisé par le fait qu'il comprend trois plaques de verre réunies par des couches de résine et présentant, par rapport à l'agrégat composite, de l'intérieur vers l'extérieur, une épaisseur de 10 mm, 8 mm, 4 mm (fig. 3).

R/dB

60

50

40

30

125   250   500   1000  2000        f / Hz

K        G

S S S S

4    4    4    4

0,76  1,2   1,2

Fig. 1

R/dB

60

50

40

125   250   500   1000   2000      f/Hz

K          G

| S | S | S | S | S |
|---|---|---|---|---|
| 8 | 8 | 8 | 4 | 4 |

0,76   1,2   1,2   1,2

Fig. 2

Fig. 3